# EUROPEAN PATENT APPLICATION

(11) **EP 2 437 002 A1**
(43) Date of publication of application: **04.04.2012**
(21) Application number: 10185741.5
(22) Date of filing: 01.10.2010
(51) Int. Cl.: F24J 2/46

(54) **Solar panel ventilation arrangement**

(71) Applicant: Sunstrip AB, 612 44 Finspång (SE)
(72) Inventor: Sundkvist, Robert, 269 36, Båstad (SE)
(74) Representative: VALEA AB

(57) **Abstract**

The present invention relates to a solar panel ventilation arrangement (1) having a frame (2) from profiled sections (2a, 2b, 2c, 2d) surrounding an opening (3) in a housing. The housing having therein mounted thermal insulation (5), and a radiation transparent front cover (6) held at the frame (2) by a sealing strip (7) such that it covers the opening (3). Between the radiation transparent front cover (6) and the thermal insulation (5) is arranged an absorber unit (8). The frame (2) has air intake/exhaust holes (9) at one or more corners (2e, 2f, 2g, 2h) thereof, which provide for air-flow communication with respective ventilation channels (10) extending along an interior of the respective profiled sections (2a, 2b, 2c, 2d) and opening towards the associated sealing strip (7). The sealing strip (7), at predetermined distances from one or more of the corners (2e, 2f, 2g, 2h), has one or more respective cut-out sections (11) adjacent the inside of the radiation transparent front cover (6) providing for air-flow communication between the housing interior and the associated ventilation channel (10).

## Description

### TECHNICAL FIELD

The present invention is related to a solar panel ventilation arrangement in accordance with the preamble of claim 1.

### BACKGROUND OF THE INVENTION

Ventilation of solar panels is used in order to air the inner of the solar panels, and in order to avoid accumulation of moisture which may damage or deteriorate the operational properties of the solar panels. A solar panel which has been subject to moisture extensively will in all likeliness be rendered unusable. Usually the moisture will corrode the absorbing surface of the solar panel, or wet the insulation of the solar panel, such that the heat absorption and the insulation respectively will deteriorate. Heavy condensation may form at the inside of the glass of the solar panel, deteriorating the optical as well as visual properties of the solar panel. Further, in addition to contributing to the above mentioned deteriorations, moisture worsens the heating properties of the solar panel, as moisture, alternatively water, consumes energy from the process during heating. During aspiration there is also the risk of dirt and dust entering the solar panel, which deteriorates aspiration and absorption of solar rays.

Currently, two different approaches are the most common for addressing these problems. Firstly, completely sealed solar panels, and secondly solar panels that breathe.

The first approach of having completely sealed solar panels may, if the solar panels are handled incorrectly, lead to cracking of their atmospheric seals, allowing moisture to penetrate. Ageing of solar panels occurs at an accelerated pace as the materials of the solar panel are subject to extreme conditions with high temperature variations daily. Also, variations in atmospheric pressure and humidity of the surrounding air may affect the integrity of the seal. If moisture manages to penetrate such a sealed solar panel, the moisture will be unable to exit the solar panel, why the solar panel will degenerate gradually until it will be fully non-operational. Further, producing completely sealed solar panels is expensive and cumbersome, and rendering them sealed for a 30 year life, which today is a common requirement, is extremely difficult.

The second approach, solar panels that breathe, is less sensitive to damages in an atmospheric seal of the solar panels. This as the solar panels will exhaust any moisture that enters. A controlled aeration of the solar panels is usually catered for, where any moisture which manages to enter the solar panel is expelled there from. During the daily heating of the solar panels a pressure above atmospheric is created within the solar panels and during cooling off of the solar panels a pressure below atmospheric, rendering an automatic breathing functionality. However, ventilated solar panels suffers the risk that droplets of rain or more moisture than the solar panel is able to ventilate enters through the ventilation openings provided.

An additional problem is that dirt and dust may enter by the aspiration passages, to deteriorate the solar panel. In order to counter the entry of dirt and dust through the ventilation openings which may deteriorate the solar panel, filters are sometimes used.

Membrane filters causes the cost of the solar panel to increase due to high materials cost and increased production costs. The ventilation openings may sometimes be adjacent the insulation, which may cause moisture to adhere to the fibres of the insulation, and thus to remain within the solar panel during exhaust.

### SUMMARY OF THE INVENTION

An object of the present invention is to provide an improved solar panel ventilation arrangement, through which the above discussed problems are eliminated or at least reduced.

According to a first aspect of the present invention this object is achieved in accordance with claim 1, which specifies a solar panel ventilation arrangement having a frame from profiled sections surrounding an opening in a housing, the housing having therein mounted thermal insulation, and a radiation transparent front cover held at the frame by a sealing strip such that it covers the opening, and a between the radiation transparent front cover and the thermal insulation arranged absorber unit, where the frame at one or more corners thereof has air intake/exhaust holes, which provide for air-flow communication with respective ventilation channels extending along an interior of the respective profiled sections and opening towards the associated sealing strip, which at predetermined distances from one or more of the corners have one or more respective cut-out sections adjacent the inside of the radiation transparent front cover providing for air-flow communication between the housing interior and the associated ventilation channel.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is a perspective view of a first embodiment of a solar panel comprising the inventive solar panel ventilation arrangement;
Figure 2 is a partial sectional view of the solar panel ventilation arrangement of FIG. 1 along line A-A;
Figure 3 is a partial sectional view of the solar panel ventilation arrangement of FIG. 1 along line B-B;
Figure 4 is the perspective view of figure 1 illustrating the flow of air in and out of the solar panel.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

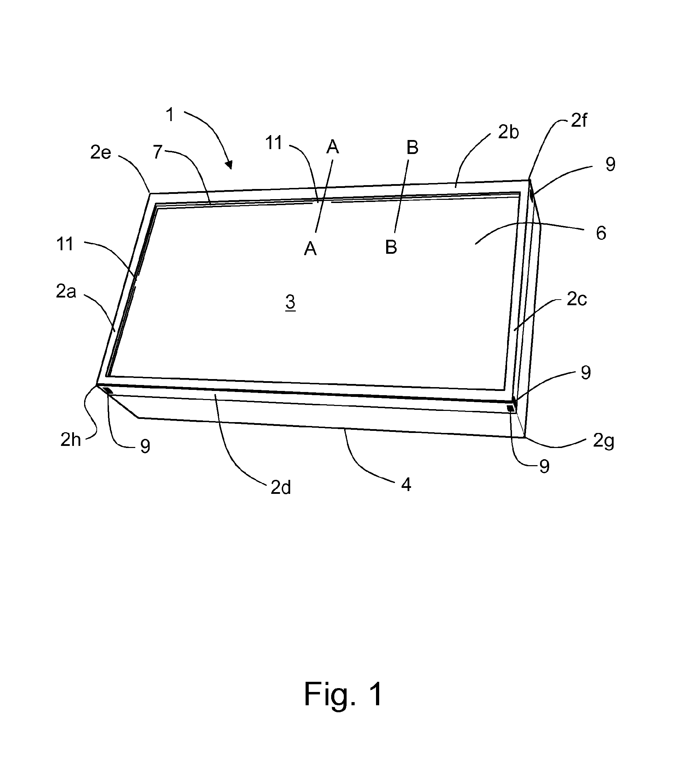

In a preferred first embodiment of the present invention, as shown schematically in FIG. 1, a perspective view of a solar panel comprising the inventive solar panel ventilation arrangement is illustrated. The solar panel ventilation arrangement 1 has a frame 2 from profiled sections 2a, 2b, 2c, 2d surrounding an opening 3 in a housing comprising the profiled sections 2a, 2b, 2c, 2d and a bottom section 4.

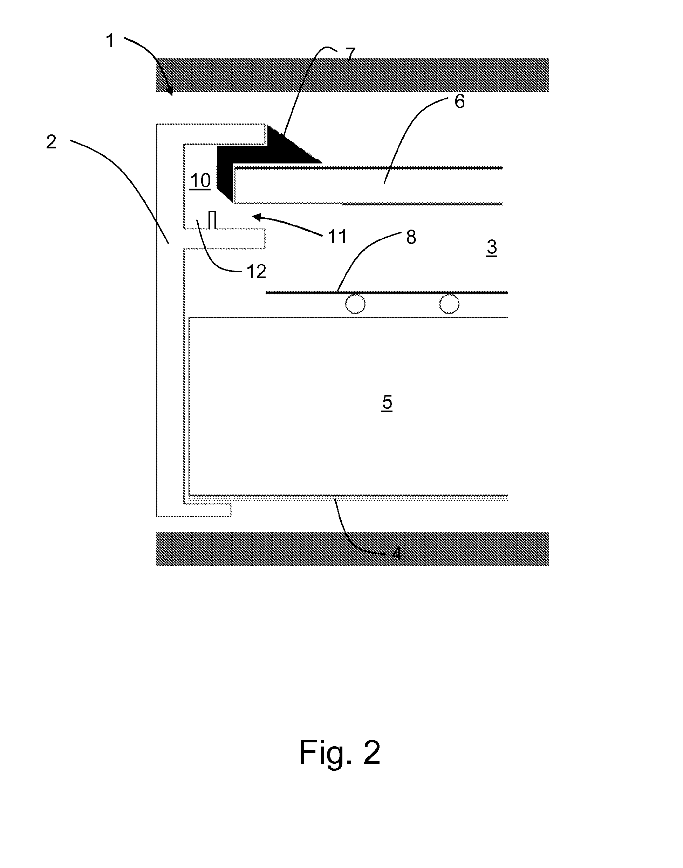

As can be seen from FIG. 2, which illustrates a partial sectional view of the solar panel ventilation arrangement of FIG. 1 along line A-A, the housing has therein mounted thermal insulation 5, and a radiation transparent front cover 6, such as a glass pane, is held at the frame 2 by a sealing strip 7 such that it covers the opening 3. Between the radiation transparent front cover 6 and the thermal insulation 5 is arranged an absorber unit 8.

As shown in FIG. 1, the frame 2, at one or more corners 2e, 2f, 2g, 2h thereof, has air intake/exhaust holes 9, which provide for air-flow communication with respective ventilation channels 10. The respective ventilation channels 10 extend along an interior of the respective profiled sections 2a, 2b, 2c, 2d and opens towards the associated sealing strip 7. The sealing strip 7, at predetermined distances from one or more of the corners 2e, 2f, 2g, 2h, has one or more respective cut-out sections 11 adjacent the inside of the radiation transparent front cover 6. The respective cut-out sections 11 provide for air-flow communication between the housing interior and the associated ventilation channel 10 and on to the ambient atmosphere via the air intake/exhaust holes 9. The respective cut-out sections 11 are provided adjacent the inside of the radiation transparent front cover 6 in order to counteract the accumulation of moisture in the thermal insulation 5.

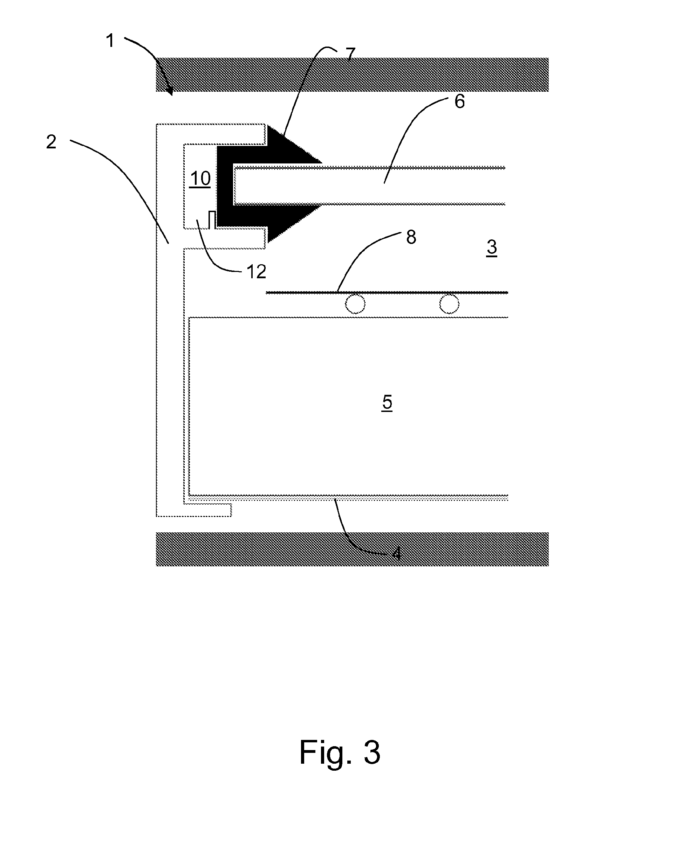

As can be seen from FIG. 3, which illustrates a partial sectional view of the solar panel ventilation arrangement of FIG. 1 along line B-B, The sealing strip 7 completely seals the housing interior from the associated ventilation channel 10 where no cut-out sections 11 are provided.

In one embodiment the one or more respective cut-out sections 11 are provided symmetrically along the extension of each respective parallel profiled sections 2a, 2b, 2c, 2d. Hereby the solar panel may be mounted arbitrarily whilst still maintaining proper functioning of the ventilation arrangement 1. It also becomes easier and more cost effective to manufacture as less varieties are needed.

In a further embodiment the predetermined distances from one or more of the corners 2e, 2f, 2g, 2h of the frame 2 are selected such that humidity in the adjacent air is allowed to condensate in the respective ventilation channels 10 of the profiled sections 2a, 2b, 2c, 2d of the frame 2 before reaching the housing interior. Hereby is enabled that the frame acts as a heat exchanger making the transition between the atmosphere within the solar panel and the ambient atmosphere more controlled as condensation of moisture present in the ambient air takes place before the ambient air enters the solar panel.

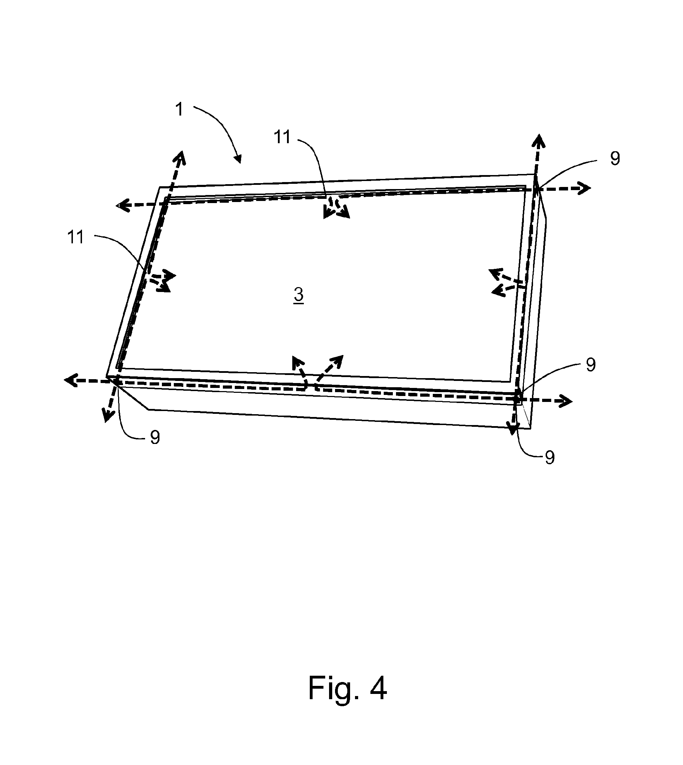

The flow of air in and out of the solar panel is illustrated by the dashed arrows of figure 4, from which can be seen how air exits the interior of the solar panel at the respective cut-out sections 11 which, in the illustrated embodiment, are arranged essentially centrally of the respective profiled sections 2a, 2b, 2c, 2d. The exiting air then continues inside the respective ventilation channels 10 of the profiled sections 2a, 2b, 2c, 2d of the frame 2 all the way to the corners 2e, 2f, 2g, 2h, where the air exits the frame 2 through the air intake/exhaust holes 9. Depending on the length of the respective profiled sections 2a, 2b, 2c, 2d and the placement of the respective cut-out sections 11 an appropriate length of the heat exchange sections may be achieved.

The fact that the frame 2 acts as a heat exchanger also enables an improved ventilation effect whilst the efficiency of the solar panel is maintained. This is due to the fact that the above heat exchange capability allows for pre-heating of ventilation air entering the solar panel as it cools off, e.g. when a cloud covers the sun. This is possible when the profiled sections 2a, 2b, 2c, 2d of the frame 2 previously has been heated by warm air which has been exhausted from the solar panel interior, as is was heated, e.g. by the sun. Thus, less energy is required for bringing the air ventilated into a solar panel to an operating temperature, as heat from the exhausted air in this way is recycled into the freshly supplied air. In this manner the warm air exiting through the profiled sections 2a, 2b, 2c, 2d of the frame 2 is used to heat the aluminium frame 2 as a counter-current heat exchanger, and in this way radiation losses from the frame to the ambient air will be reduced while at the same time the efficiency of the solar panel is improved.

This heat exchange capability is especially useful when a number of solar panels are arranged coupled to each other in a frame to frame manner. In such an arrangement the adjacent profiled sections of two neighbouring solar panels will not be cooled off by ambient conditions to the same extent as would occur for a single solar panel. This due to the fact that heat will be exchanged also between the adjacent profiled sections of the frames. Hence, the efficiency of a thus configured system of multiple solar panels would be substantially increased by the heat exchange capability of the ventilation arrangement.

In a still further embodiment the predetermined distances from one or more of the corners 2e, 2f, 2g, 2h of the frame 2 are selected such that dirt and dust in the adjacent air is allowed to adhere to the respective ventilation channels 10 of the profiled sections 2a, 2b, 2c, 2d of the frame 2 before reaching the housing interior. Hereby dirt and dust present in the ambient air is, at least partially removed there from, before the ambient air enters the solar panel.

In yet a further embodiment the predetermined distances from one or more of the corners 2e, 2f, 2g, 2h of the frame 2 are selected such that splashing water is prevented from entering the housing interior via the respective ventilation channels 10 of the profiled sections 2a, 2b, 2c, 2d of the frame 2. Hereby, through ensuring sufficient distances, the risk of water splashing or running into the housing interior via the air intake/exhaust holes 9 will be significantly reduced.

In a still further embodiment the respective ventilation channels 10 of the profiled sections 2a, 2b, 2c, 2d of the frame 2 are profiled such that water in the respective ventilation channels 10 will be transported to an associated air intake hole 9, and thus drained from the associated ventilation channel 10. It is here preferred that the respective ventilation channels 10 of the profiled sections 2a, 2b, 2c, 2d of the frame 2 comprises an essentially U-shaped section 12 for transporting water to the associated air intake hole 9.

In a yet still further embodiment the predetermined distances from one or more of the corners 2e, 2f, 2g, 2h of the frame 2 are selected such that the respective cut-out sections 11 are essentially centralized along the extension of the respective profiled sections 2a, 2b, 2c, 2d. This further facilitates ease of manufacturing and control of manufacturing costs whilst allowing for arbitrary mounting of the solar panel whilst still maintaining proper functioning of the ventilation arrangement 1.

In yet a further embodiment the respective ventilation channels 10 of the profiled sections 2a, 2b, 2c, 2d of the frame 2 are profiled such that heat exchange between the profiled sections 2a, 2b, 2c, 2d and an air-flow between the housing interior and the air intake/exhaust holes 9 is promoted. Thus, through e.g. profiled elements, such as flanges, ribs or fins, (not shown) being provided within the respective ventilation channels 10 heat exchange between the profiled sections 2a, 2b, 2c, 2d and the air-flow may be promoted, thus increasing the ability of the frame to act as a heat exchanger as described above, and also for condensation of moisture present in the ambient air before the ambient air enters the solar panel. Thus, relative humidity within the solar panel may be maintained at a low level.

In accordance with embodiments of the present invention any condensation and moisture entering the solar panel will aggregate near the radiation transparent front cover 6, and thus be readily exhausted from the housing interior through the respective cut-out sections 11 which are provided adjacent the inside of the radiation transparent front cover 6.

The solar panel ventilation arrangement 1 in accordance with embodiments of the present invention thus provides a controlled breathing ventilation of solar panels through which is provided for reduced entry of moisture into the solar panel housing interior as well as improved abilities to exhaust any moisture present within the solar panel housing interior.

The solar panel ventilation arrangement 1 in accordance with embodiments of the present invention has also proven to provide very good abilities for equalizing pressures in conditions such as e.g. gusty wind conditions, which may also cause a pumping ventilation effect.

As the respective ventilation channels 10 extending along the interior of the respective profiled sections 2a, 2b, 2c, 2d of the frame 2 in accordance with embodiments of the present invention are arranged to operate as dynamic heat exchangers, heat losses may be reduced in conditions such as e.g. wobbly wind conditions, which may also cause a pumping ventilation effect.

In accordance with the present invention is also envisaged a solar panel, which comprises a solar panel ventilation arrangement as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A solar panel ventilation arrangement (1) having a frame (2) from profiled sections (2a, 2b, 2c, 2d) surrounding an opening (3) in a housing, the housing having therein mounted thermal insulation (5), and a radiation transparent front cover (6) held at the frame (2) by a sealing strip (7) such that it covers the opening (3), and a between the radiation transparent front cover (6) and the thermal insulation (5) arranged absorber unit (8), **characterised in that**:
the frame (2) at one or more corners (2e, 2f, 2g, 2h) thereof has air intake/exhaust holes (9), which provide for air-flow communication with respective ventilation channels (10) extending along an interior of the respective profiled sections (2a, 2b, 2c, 2d) and opening towards the associated sealing strip (7), which at predetermined distances from one or more of the corners (2e, 2f, 2g, 2h) have one or more respective cut-out sections (11) adjacent the inside of the radiation transparent front cover (6) providing for air-flow communication between the housing interior and the associated ventilation channel (10).

2. The solar panel ventilation arrangement (1) according to claim 1, **characterised in that** the one or more respective cut-out sections (11) are provided symmetrically along the extension of each respective parallel profiled sections (2a, 2b, 2c, 2d).

3. The solar panel ventilation arrangement (1) according to claim 2, **characterised in that** the predetermined distances from one or more of the corners (2e, 2f, 2g, 2h) of the frame (2) are selected such that humidity in the adjacent air is allowed to condensate in the respective ventilation channels (10) of the profiled sections (2a, 2b, 2c, 2d) of the frame (2) before reaching the housing interior.

4. The solar panel ventilation arrangement (1) according to any one of claims 1 to 3, **characterised in that** the predetermined distances from one or more of the corners (2e, 2f, 2g, 2h) of the frame (2) are selected such that dirt and dust in the adjacent air is allowed to adhere to the respective ventilation channels (10) of the profiled sections (2a, 2b, 2c, 2d) of the frame (2) before reaching the housing interior.

5. The solar panel ventilation arrangement (1) according to claim 4, **characterised in that** the predetermined distances from one or more of the corners (2e, 2f, 2g, 2h) of the frame (2) are selected such that splashing water is prevented from entering the housing interior via the respective ventilation channels (10) of the profiled sections (2a, 2b, 2c, 2d) of the frame (2).

6. The solar panel ventilation arrangement (1) according to claim 5, **characterised in that** the respective ventilation channels (10) of the profiled sections (2a, 2b, 2c, 2d) of the frame (2) are profiled such that water in the respective ventilation channels (10) will be transported to an associated air intake hole (9), and thus drained from the associated ventilation channel (10).

7. The solar panel ventilation arrangement (1) according to claims 6, **characterised in that** the respective ventilation channels (10) of the profiled sections (2a, 2b, 2c, 2d) of the frame (2) comprises an essentially U-shaped section (12) for transporting water to the associated air intake hole (9).

8. The solar panel ventilation arrangement (1) according to any one of claims 1 to 7, **characterised in that** the predetermined distances from one or more of the corners (2e, 2f, 2g, 2h) of the frame (2) are selected such that the respective cut-out sections (11) are essentially centralized along the extension of the respective profiled sections (2a, 2b, 2c, 2d).

9. The solar panel ventilation arrangement (1) according to any one of claims 1 to 8, **characterised in that** the respective ventilation channels (10) of the profiled sections (2a, 2b, 2c, 2d) of the frame (2) are profiled such that heat exchange between the profiled sections (2a, 2b, 2c, 2d) and an air-flow between the housing interior and the air intake/exhaust holes (9) is promoted.

10. A solar panel **characterised in that** it comprises a solar panel ventilation arrangement (1) according to any one of the preceding claims.

11. A solar panel arrangement **characterised in that** it comprises a plurality of solar panels according to claim 10, arranged coupled to each other in a frame to frame manner.
